# EUROPÄISCHE PATENTANMELDUNG

(11) **EP 2 604 324 A1**
(43) Veröffentlichungstag der Anmeldung: **19.06.2013**
(21) Anmeldenummer: 12193397.2
(22) Anmeldetag: 20.11.2012
(51) Int. Cl.: B01D 46/00

(54) **Kanalschwebstofffilter zur Filterung eines strömenden Gases**

(30) Priorität: 14.12.2011 DE 202011052303 U
(71) Anmelder: TROX GmbH, 47506 Neukirchen-Vluyn (DE)
(72) Erfinder: Oude-Hendrikman, Harry, 47661 Issum (DE)
(74) Vertreter: DR. STARK & PARTNER

(57) **Zusammenfassung**

Die Erfindung betrifft einen Kanalschwebstofffilter zur Filterung eines strömenden Gases mit einem Kanalgehäuse, welches zumindest einen einen Einlass bildenden Einlassstutzen, zumindest einen einen Auslass bildenden Auslassstutzen und zumindest einen zwischen dem Einlass und dem Auslass angeordneten, einen rechteckigen Querschnitt aufweisenden und in seinem Inneren zumindest ein Filterelement aufweisenden Gehäuseabschnitt umfasst, wobei das zu reinigende Gas nach Eintritt durch den Einlass und nach Durchströmen eines Filterelementes in dem Auslassstutzen umgelenkt wird. Um einen Kanalschwebstofffilter anzugeben, der eine gleichmäßige Durchströmung aufweist und damit die Filterleistung verbessert wird, soll zumindest einem, insbesondere jedem Filterelement, vorzugsweise im Übergang vom Gehäuseabschnitt in den Auslassstutzen ein Leitblech zugeordnet sein, wobei das Leitblech sich zumindest über einen Teilbereich der kompletten Querlänge Q des Gehäuseabschnittes bzw. des Auslassstutzens erstreckt, insbesondere über die komplette Querlänge Q des Gehäuseabschnittes bzw. des Auslassstutzens erstreckt, und in einem Winkel β zwischen 90° bis 120° zur generellen Erstreckung der Strömungsrichtung S in dem das jeweilige Filterelement beinhaltenden Gehäuseabschnitt hin zum Auslass geneigt ausgerichtet ist.

## Beschreibung

Die Erfindung betrifft einen Kanalschwebstofffilter zur Filterung eines strömenden Gases mit einem Kanalgehäuse, welches zumindest einen einen Einlass bildenden Einlassstutzen, zumindest einen einen Auslass bildenden Auslassstutzen und zumindest einen zwischen dem Einlass und dem Auslass angeordneten, einen rechteckigen Querschnitt aufweisenden und in seinem Inneren zumindest ein Filterelement aufweisenden Gehäuseabschnitt umfasst, wobei das zu reinigende Gas nach Eintritt durch den Einlass und nach Durchströmen eines Filterelementes in dem Auslassstutzen umgelenkt wird.

Kanalschwebstofffilter werden in Luftleitungen eingebaut. Sie dienen zur Aufnahme von Filterelementen und zur Abscheidung von Schwebstoffen wie z.B. Aerosolen, toxischen Stäuben, Viren und Bakterien aus der Zu- und Abluft. Je nach der Menge des zu reinigenden Luftstroms sind nebeneinander mehrere Gehäuseabschnitte angeordnet. In jedem Gehäuseabschnitt ist zumindest ein Filterelement angeordnet. Ein Bestandteil eines Gehäuseabschnittes kann auch ein Vorfiltergehäuse sein, in dem ein Vorfilter vorgesehen ist.

Um eine möglichst gleichmäßige Aufteilung der zu reinigenden Luft auf die einzelnen Gehäuseabschnitte zu erzielen, nimmt die Querschnittsfläche des Einlassstutzen zu dem Gehäuseabschnitt hin, der am entferntesten zum Einlass angeordnet ist, ab. Der Auslassstutzen weist eine entsprechende Ausgestaltung auf. So nimmt hier die Querschnittsfläche von dem Gehäuseabschnitt, der dem Auslass am entferntesten angeordnet ist, zu dem Gehäuseabschnitt, der am nächsten zum Auslass angeordnet ist, zu.

Nachteilig ist, dass die Luftverteilung innerhalb des Kanalschwebstofffilters nicht immer gleichmäßig ist. So können Turbulenzen infolge unterschiedlicher Strömungsgeschwindigkeiten auftreten. Bei jedem Filterelement können unterschiedliche Druckdifferenzen vorliegen, und die Filterelemente würden in diesem Fall nicht gleichmäßig durchströmt werden.

Aufgabe der Erfindung ist es, die vorgenannten Nachteile zu vermeiden und einen Kanalschwebstofffilter anzugeben, der eine gleichmäßige Durchströmung aufweist und damit die Filterleistung verbessert wird.

Diese Aufgabe wird dadurch gelöst, dass zumindest einem, insbesondere jedem Filterelement, vorzugsweise im Übergang vom Gehäuseabschnitt in den Auslassstutzen ein Leitblech zugeordnet ist, wobei das Leitblech sich zumindest über einen Teilbereich der kompletten Querlänge Q des Gehäuseabschnittes bzw. des Auslassstutzens erstreckt, insbesondere über die komplette Querlänge Q des Gehäuseabschnittes bzw. des Auslassstutzens erstreckt und in einem Winkel β zwischen 90° bis 120° zur generellen Erstreckung der Strömungsrichtung S in dem das jeweilige Filterelement beinhaltenden Gehäuseabschnitt hin zum Auslass geneigt ausgerichtet ist.

Die Leitbleche erzeugen eine Art Treibstrahl, der eine gleichmäßigere Verteilung der Gasströmung innerhalb jedes Gehäuseabschnittes, d.h. innerhalb jedes Filterelementes, bewirkt. In jedem Gehäuseabschnitt wird eine annähernd gleiche Druckdifferenz erzielt und jedes Filterelement wird gleichmäßig durchströmt. Dadurch wird auch die gesamte Druckdifferenz des kompletten Kanalschwebstofffilters reduziert.

Sofern sich ein Leitblech nur über einen Teilbereich der kompletten Querlänge Q des Gehäuseabschnittes bzw. des Auslassstutzens erstreckt, beträgt die Breite B_{L} dieses Leitbleches zwischen 80% und 100% der Querlänge Q des Gehäuseabschnittes bzw. des Auslassstutzens. Beträgt die Breite B_{L} des Leitbleches beispielweise 80% der Querlänge Q und ist die Querlänge Q beispielsweise 300 mm, besteht auf einer Seite des Leitbleches ein Spalt von 60 mm. Selbstverständlich kann auch auf beiden Seiten des Leitbleches jeweils ein Spalt von je 30 mm bestehen.

Jeder Gehäuseabschnitt ist kanalförmig ausgebildet und weist einen rechteckigen Querschnitt mit der Querlänge Q und der Länge L_{G} auf. Die geometrische Strecke der Querlänge Q verläuft orthogonal zur Ausströmrichtung A und die geometrische Strecke der Länge L_{G} parallel zur Ausströmrichtung A.

Jedes Filterelement ist hinsichtlich seiner Abmessungen so auf den freien Strömungsquerschnitt des betreffenden Gehäuseabschnittes abgestellt, dass das Gas das Filterelement durchströmen muss und dieses nicht beispielsweise seitlich ungefiltert passieren kann.

Es ist selbstverständlich auch möglich, dass das zu reinigende Gas nach dem Einströmen durch den Einlass vor Durchströmen eines Filterelementes in dem Einlassstutzen umgelenkt wird.

Bei einer ersten Ausführungsform kann zumindest ein Leitblech gewölbt, insbesondere konkav in Richtung des Gehäuseabschnittes weisend gewölbt, ausgebildet sein, wobei die Krümmung in Längsrichtung der Ausströmrichtung A ausgerichtet ist und der Winkel β auf eine zwischen dem Anfangspunkt AP und dem Endpunkt EP des Leitbleches verlaufende gedachte Linie L bezogen ist. Der Radius R der Krümmung kann zwischen etwa 900 mm und 1700 mm, vorzugsweise bei etwa 1300 mm, liegen.

Bei einer zweiten Ausführungsform kann zumindest ein Leitblech unter Bildung von Leitblechteilbereichen gewinkelt, insbesondere konkav in Richtung des Gehäuseabschnittes weisend gewinkelt ausgebildet sein, wobei die Winklung in Längsrichtung der Ausströmrichtung A ausgerichtet ist und der Winkel β auf eine zwischen dem Anfangspunkt AP und dem Endpunkt EP des Leitbleches verlaufende gedachte Linie L bezogen ist. Die Winkel zwischen zwei angrenzenden Leitblechteilbereichen können zwischen 140° und 200°, vorzugsweise bei etwa 170°, liegen.

Bei einer dritten Ausführungsform kann zumindest ein Leitblech eben ausgebildet sein.

Es bietet sich an, wenn wenigstens ein Leitblech in zumindest einem Teilbereich, vorzugsweise vollständig, eine Vielzahl an Ausnehmungen, insbesondere gleichmäßig verteilt angeordnete Ausnehmungen, aufweist. Das Leitblech kann beispielsweise als Lochblech, als geschlitztes Blech oder als Streckgitter ausgebildet sein. Es bietet sich an, wenn der Anteil der geschlossen ausgebildeten Fläche etwa 65% und der Anteil der Freifläche (Fläche der Ausnehmungen) etwa 35% - jeweils bezogen auf die Gesamtfläche des Leitbleches - beträgt.

Bei einem bevorzugten Ausführungsbeispiel der Erfindung kann der Winkel β zwischen 93° und 106°, vorzugsweise zwischen 97° und 103° betragen.

Der Winkel β kann bei allen Leitblechen gleich sein.

Bei einem bevorzugten Ausführungsbeispiel sind die Winkel β der einzelnen Leitbleche ungleich. Es bietet sich dann an, dass der Winkel β der Leitbleche sich zum Auslass hin verringert. Sind beispielsweise drei Gehäuseabschnitte mit je einem Leitblech nebenaneinander angeordnet, ist der Winkel β des Leitbleches, dessen Gehäuseabschnitt am weitesten zum Auslass angeordnet ist, am größten, während der Winkel β zu dem Leitblech, dessen Gehäuseabschnitt am nächsten zum Auslass angeordnet ist, insbesondere kontinuierlich, kleiner wird.

Der Winkel β kann größer als der Winkel α zwischen der generellen Erstreckung der Strömungsrichtung S in dem jeweiligen Gehäuseabschnitt einerseits und der Ausströmungsrichtung A des Gases im Bereich des Auslasses andererseits sein.

Vorzugsweise entspricht die Länge L_{L} zumindest eines Leitbleches, die sich aus der Projektion P des Leitbleches in eine Ebene, die orthogonal zur Strömungsrichtung S in dem Gehäuseabschnitt ausgerichtet ist, ergibt, in etwa der Länge L_{G} des zugeordneten Gehäuseabschnittes, wobei die Länge L_{L} von 90% bis zu 110% von der Länge L_{G} sein kann. So kann beispielsweise die Länge L_{G} des Gehäuseabschnittes 625 mm und die Länge L_{L} des Leitbleches 600 mm betragen.

Zumindest ein Leitblech kann im Bereich der dem Auslass abgewandten Seite in dem Gehäuseabschnitt bzw. im Bereich der dem Auslass abgewandten Kante des Gehäuseabschnittes befestigt sein.

Es bietet sich an, wenn mehrere nebeneinander angeordnete, in Einströmrichtung E gesehen hintereinander angeordnete Gehäuseabschnitte mit jeweils zumindest einem Filterelement vorgesehen sind. Eine solche Ausgestaltung bietet sich insbesondere bei großen Volumenstrommengen an. Die Anzahl an nebeneinander angeordneten Gehäuseabschnitte ist beliebig.

Beispielsweise zum Zwecke der Wartung bietet sich an, wenn zumindest ein Gehäuseabschnitt zur Entnahme des(der) betreffenden Filterelementes(Filterelemente) öffenbar und verschließbar ist.

Im Folgenden werden in den Zeichnungen dargestellte Ausführungsbeispiele der Erfindung erläutert. Es zeigen:
- Fig. 1: eine Draufsicht auf einen erfindungsgemäßen Kanalschwebstofffilter,
- Fig. 2: eine Seitenansicht von links auf den Gegenstand nach Fig. 1,
- Fig. 3: einen Schnitt I-I durch den Gegenstand nach Fig. 1,
- Fig. 4: ein Kanalschwebstofffilter mit einem gewinkelt ausgebildeten Leitblech,
- Fig. 5: ein Kanalschwebstofffilter mit einem gekrümmt ausgebildeten Leitblech und
- Fig. 6-9: verschiedene Stutzenanordnungen bei einem Kanalschwebstofffilter, wobei die erfindungsgemäßen Leitbleche nicht dargestellt sind.

In allen Figuren werden für gleiche bzw. gleichartige Bauteile übereinstimmende Bezugszeichen verwendet.

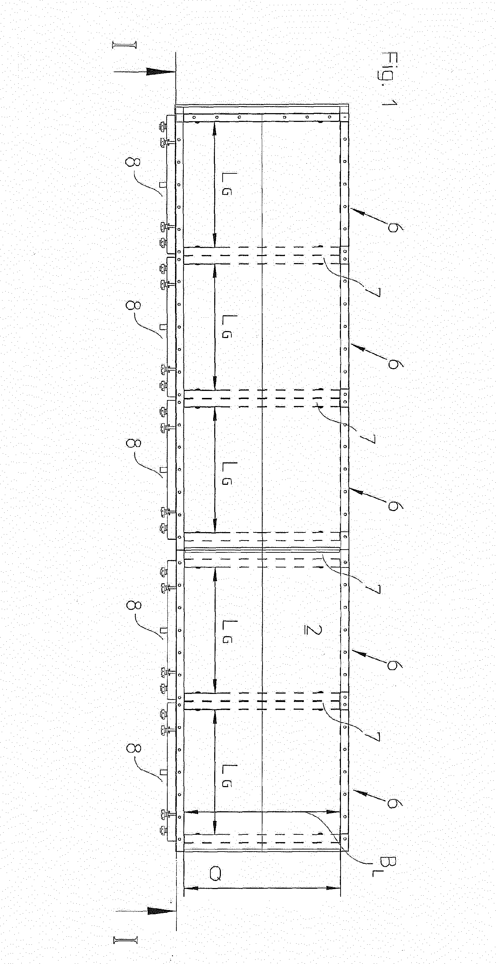

In den Fig. 1 bis 3 ist ein erfindungsgemäßer Kanalschwebstofffilter mit einem Kanalgehäuse dargestellt, das einen einen Einlass 1 bildenden Einlassstutzen 2 und einen einen Auslass 3 bildenden Auslassstutzen 4 aufweist. Der Kanalschwebstofffilter weist unterseitig Standfüße 5 auf.

Zwischen dem Einlassstutzen 2 und dem Auslassstutzen 4 sind in dem dargestellten Ausführungsbeispiel fünf Gehäuseabschnitte 6 vorgesehen. Jeder Gehäuseabschnitt 6 weist einen rechteckigen Strömungsquerschnitt auf und ist kanalförmig ausgebildet. Zwischen zwei benachbarten Gehäuseabschnitten 6 ist jeweils eine Zwischenwandung 7 vorgesehen.

In jedem Gehäuseabschnitt 6 sind zwei Filterelemente 10, 11 angeordnet, die in Strömungsrichtung S gesehen hintereinander angeordnet sind. Das in einen Gehäuseabschnitt 6 einströmende zu reinigende Gas durchströmt beide Filterelemente 10, 11 dieses Gehäuseabschnittes 6. Bei den Filterelementen 10 handelt es sich beispielsweise um Vorfilter, während die Filterelemente 11 die eigentlichen Hauptfilter darstellen. Die fünf Gehäuseabschnitte 6 sind nebeneinander und in Einströmrichtung E gesehen hintereinander angeordnet.

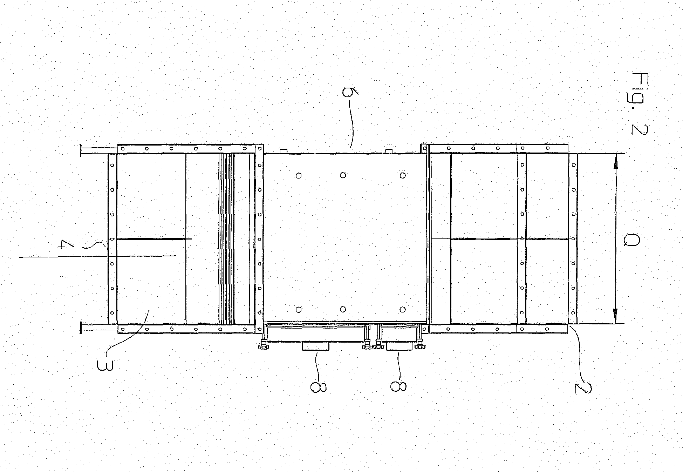

Wie insbesondere den Fig. 1 und 2 zu entnehmen ist, hat jeder Gehäuseabschnitt 6 zwei Entnahmeöffnungen zur Entnahme der Filterelemente 10, 11. Jede Entnahmeöffnung ist mit einem Deckel 8 verschlossen, der z.B. zum Wechsel des betreffenden Filterelementes 10,11 öffenbar ist. An jedem Filterelement 10, 11 ist ein Spannhebel 12 bzw. 13 vorgesehen, der zur Fixierung des betreffenden Filterelementes 10,11 im Gehäuseabschnitt 6 dient. Im verschlossenen Zustand des Kanalschwebstofffilters befinden sich die Spannhebel 12 bzw. 13 hinter dem betreffenden Deckel 8.

Wie aus Fig. 1 hervorgeht, ist die Länge L_{G} jedes Gehäuseabschnittes 6 etwas größer als die korrespondierenden Abmessungen der Filterelemente 10 und 11. Dies ist darin begründet, da in jedem Gehäuseabschnitt 6 auf beiden Seiten jedes Filterelementes 10 bzw. 11 nicht näher dargestellte Führungen 14 für das betreffende Filterelement 10 bzw. 11 vorgesehen sind. Insoweit erstreckt sich weder jede Entnahmeöffnung noch jeder Deckel 8 über die komplette Länge L_{G} jedes Gehäuseabschnittes 6.

Der freie Strömungsquerschnitt des Einlassstutzens 2 verringert sich in Einlassstromrichtung E gesehen von dem Gehäuseabschnitt 6, der am nächsten zum Einlass 1 angeordnet ist, zu dem Gehäuseabschnitt 6, der am entferntesten vom Einlass 1 angeordnet ist. Das zu reinigende Gas wird von dem Übergang des Einlassstutzens 2 in einen der fünf Gehäuseabschnitte 6 umgelenkt. In dem Einlassstutzen 2 strömt das zu reinigende Gas in Einstömrichtung E. Innerhalb eines Gehäuseabschnittes 6 besteht die Strömungsrichtung S.

Auch der Auslassstutzen 4 weist eine entsprechende Ausgestaltung auf. Der freie Strömungsquerschnitt des Auslassstutzens 4 vergrößert sich zum Auslass 3 hin. So ist der freie Strömungsquerschnitt des Auslassstutzens 4 im Bereich des Gehäuseabschnittes 6, der am weitesten zum Auslass 3 angeordnet ist, am kleinsten und vergrößert sich kontinuierlich zu dem Gehäuseabschnitt 6, der am nächsten zum Auslass 3 angeordnet ist. Das zu reinigende Gas wird nach Durchströmen der beiden in einem Gehäuseabschnitt 6 befindlichen Filterelemente 10, 11 in Ausströmrichtung A in dem Auslassstutzen 4 umgelenkt.

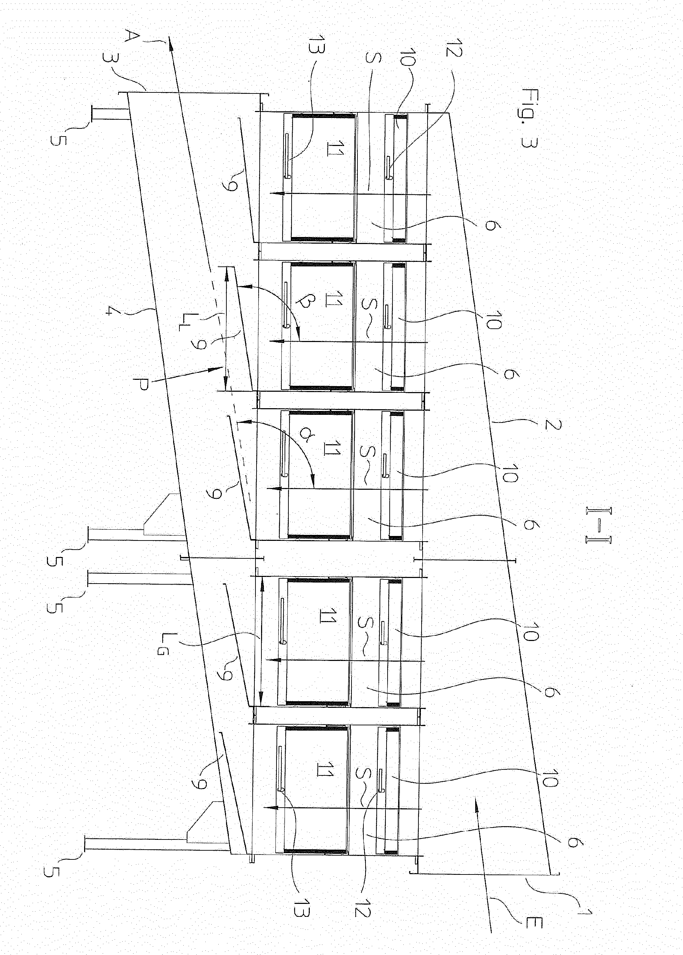

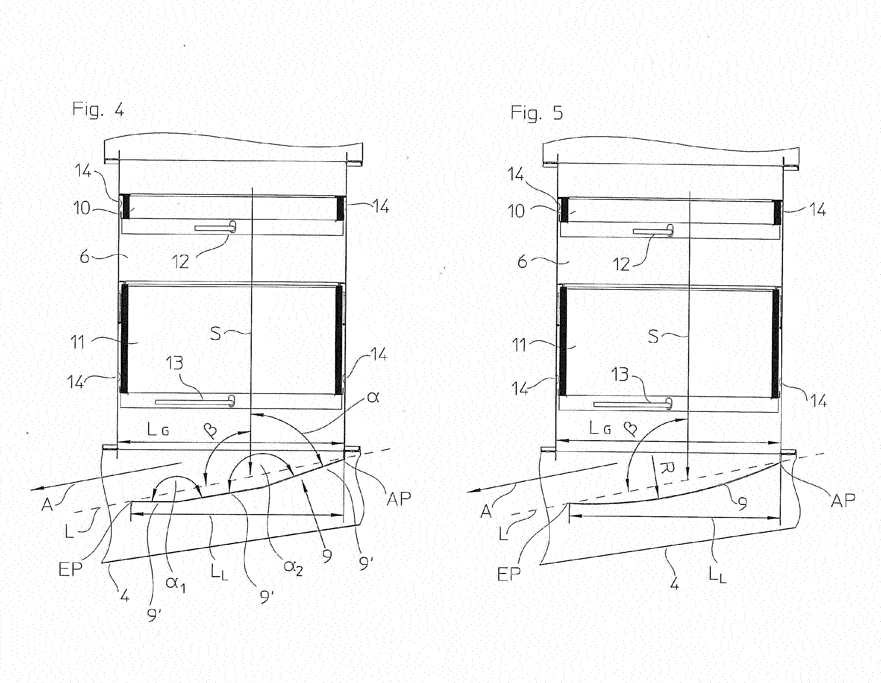

Im Übergang von jedem Gehäuseabschnitt 6 zum Auslassstutzen 4 ist jeweils ein Leitblech 9 vorgesehen. Bei dem Ausführungsbeispiel nach Fig. 3 ist jedes Leitblech 9 eben ausgebildet. In den Figuren 4 und 5 sind alternative Ausgestaltungen dargestellt. Fig. 4 zeigt ein Leitblech 9 mit einer abgewinkelten Ausgestaltung. In Fig. 5 ist das Leitblech 9 gekrümmt ausgebildet.

Die Länge L_{L} jedes Leitbleches 9 ist bei den in den Fig. 3 bis 5 dargestellten Ausführungsbeispielen etwa 2 bis 5% kleiner als die Länge L_{G} des zugeordneten Gehäuseabschnittes 6.

In dem in den Fig. 1-3 dargestellten Ausführungsbeispiel erstreckt sich jedes Leitblech 9 über die komplette Querlänge Q des Gehäuseabschnittes 6, da die Querlänge Q des Gehäuseabschnittes 6 einerseits und die Breite B_{L} des Leitbleches 9 andererseits gleich sind.

Jedes Leitblech 9 ist bei dem in den Fig. 3 dargestellten Ausführungsbeispiel in einem Winkel β zum Auslass 3 hin geneigt ausgerichtet. Der Winkel β liegt zwischen der generellen Erstreckung der Strömungsrichtung S in dem das jeweilige Filterelement beinhaltenden Gehäuseabschnitt 6 einerseits und dem geneigten Leitblech 9 andererseits.

Wie insbesondere Fig. 3 zu entnehmen ist, nimmt die Größe des Winkels β von dem Leitblech 9, das am Entferntesten zum Auslass 3 angeordnet ist, zu dem Leitblech 9, das am Nächsten zum Auslass 3 angeordnet ist, kontinuierlich ab.

Der Winkel β ist in dem in Fig. 3 dargestellten Ausführungsbeispiel größer als der Winkel α. Der Winkel α liegt zwischen der generellen Erstreckung der Strömungsrichtung S in dem jeweiligen Gehäuseabschnitt 6 einerseits und der Ausströmrichtung A des Gases im Bereich des Auslasses 3 des Auslassstutzens 4 andererseits.

Bei der Ausströmrichtung A handelt es sich um die Richtung, die im Bereich des Auslasses 3 oder in Ausströmrichtung A gesehen kurz vor dem Auslass 3 herrscht, wenn der Auslass 3 noch nicht mit einer weiteren Komponente verbunden ist. Je nach der Ausgestaltung einer mit dem Auslass 3 verbundenen Komponente kann sich die Ausströmrichtung A ändern.

In Fig. 4 ist eine abgewinkelte Ausgestaltung eines Leitbleches 9 dargestellt. Das Leitblech 9 besteht aus drei Leitblechteilbereichen 9' und ist in dem dargestellten Ausführungsbeispiel konkav in Richtung des Gehäuseabschnittes 6 weisend gewinkelt ausgebildet. Die Winklungen sind in Längsrichtung der Ausströmrichtung A gesehen ausgerichtet. Der Winkel β bezieht sich auf eine zwischen dem Anfangspunkt AP und dem Endpunkt EP des Leitbleches 9 verlaufende gedachte Linie L. Die Winkel α₁ und α₂, die sich jeweils zwischen zwei angrenzenden Leitblechteilbereichen 9' befinden, betragen etwa 170°. Es sind aber auch Winkel α₁ und α₂ zwischen 140° und 200° möglich. Die Winkel α₁ und α₂ können - wie in dem dargestellten Ausführungsbeispiel - gleich oder auch unterschiedlich groß sein. Selbstverständlich kann ein Leitblech 9 auch aus zwei, vier oder einer noch größeren Anzahl an Leitblechteilbereichen 9' bestehen.

In Fig. 5 ist eine gekrümmt ausgebildete Ausgestaltung eines Leitbleches 9 dargestellt. Das Leitblech 9 ist in dem dargestellten Ausführungsbeispiel konkav in Richtung des Gehäuseabschnittes 6 weisend gewölbt ausgebildet. Die Krümmung ist in Längsrichtung der Ausströmrichtung A gesehen ausgerichtet. Auch hier ist der Winkel β auf eine zwischen dem Anfangspunkt AP und dem Endpunkt EP des Leitbleches 9 verlaufende gedachte Linie L bezogen. Der Radius R der Krümmung beträgt in dem dargestellten Ausführungsbeispiel etwa 1300 mm. Der Radius R kann zwischen etwa 900 mm und 1700 mm liegen.

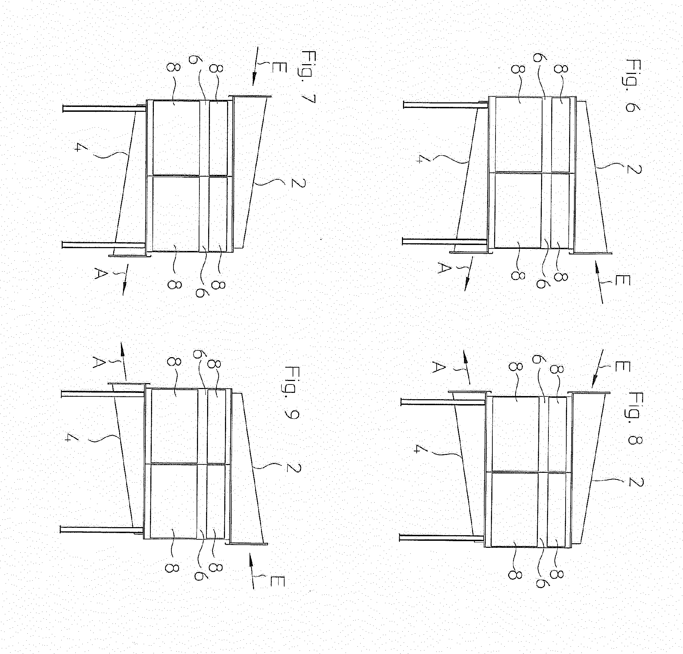

Die Fig. 6 bis 9 stellen Prinzipskizzen dar, in denen verschiedene Stutzenanordnungen dargestellt sind. Dabei ist auf die Darstellung der erfindungsgemäßen Leitbleche 9 verzichtet worden. Bei den Fig. 7 und 9 sind der Einlassstutzen 2 und der Auslassstutzen 4 so angeordnet, dass die Einströmrichtung E und die Ausströmrichtung A in die gleiche Richtung weisen.

Bei der Ausgestaltung nach den Fig. 6 und 8 sind aufgrund der Anordnung des Einlassstutzens 2 und des Auslassstutzens 4 die Einströmrichtung E und die Ausströmrichtung A entgegengesetzt ausgerichtet.

## Patentansprüche

1. Kanalschwebstofffilter zur Filterung eines strömenden Gases mit einem Kanalgehäuse, welches zumindest einen einen Einlass (1) bildenden Einlassstutzen (2), zumindest einen einen Auslass (3) bildenden Auslassstutzen (4) und zumindest einen zwischen dem Einlass (1) und dem Auslass (3) angeordneten, einen rechteckigen Querschnitt aufweisenden und in seinem Inneren zumindest ein Filterelement (10, 11) aufweisenden Gehäuseabschnitt (6) umfasst, wobei das zu reinigende Gas nach Eintritt durch den Einlass (1) und nach Durchströmen eines Filterelementes (10, 11) in dem Auslassstutzen (4) umgelenkt wird, **dadurch gekennzeichnet, dass** zumindest einem, insbesondere jedem Filterelement (10, 11), vorzugsweise im Übergang vom Gehäuseabschnitt (6) in den Auslassstutzen (4) ein Leitblech (9) zugeordnet ist, wobei das Leitblech (9) sich zumindest über einen Teilbereich der kompletten Querlänge Q des Gehäuseabschnittes (6) bzw. des Auslassstutzens (4) erstreckt, insbesondere über die komplette Querlänge Q des Gehäuseabschnittes (6) bzw. des Auslassstutzens (4) erstreckt, und in einem Winkel β zwischen 90° bis 120° zur generellen Erstreckung der Strömungsrichtung S in dem das jeweilige Filterelement (10, 11) beinhaltenden Gehäuseabschnitt (6) hin zum Auslass (3) geneigt ausgerichtet ist.

2. Kanalschwebstofffilter nach dem vorhergehenden Anspruch, **dadurch gekennzeichnet, dass** zumindest ein Leitblech (9) gewölbt, insbesondere konkav in Richtung des Gehäuseabschnittes (6) weisend gewölbt, ausgebildet ist, wobei die Krümmung in Längsrichtung der Ausströmrichtung A ausgerichtet ist und der Winkel β auf eine zwischen dem Anfangspunkt AP und dem Endpunkt EP des Leitbleches (9) verlaufende gedachte Linie L bezogen ist.

3. Kanalschwebstofffilter nach einem der vorhergehenden Ansprüche, **dadurch gekennzeichnet, dass** zumindest ein Leitblech (9) unter Bildung von Leitblechteilbereichen (9') gewinkelt, insbesondere konkav in Richtung des Gehäuseabschnittes (6) weisend gewinkelt ausgebildet ist, wobei die Winklung in Längsrichtung der Ausströmrichtung A ausgerichtet ist und der Winkel β auf eine zwischen dem Anfangspunkt AP und dem Endpunkt EP des Leitbleches (9) verlaufende gedachte Linie L bezogen ist.

4. Kanalschwebstofffilter nach einem der vorhergehenden Ansprüche, **dadurch gekennzeichnet, dass** zumindest ein Leitblech (9) eben ausgebildet ist.

5. Kanalschwebstofffilter nach einem der vorhergehenden Ansprüche, **dadurch gekennzeichnet, dass** wenigstens ein Leitblech (9) in zumindest einem Teilbereich, vorzugsweise vollständig, eine Vielzahl an Ausnehmungen, insbesondere gleichmäßig verteilt angeordnete Ausnehmungen, aufweist.

6. Kanalschwebstofffilter nach einem der vorhergehenden Ansprüche, **dadurch gekennzeichnet, dass** der Winkel β zwischen 93° und 106°, vorzugsweise zwischen 97° und 103°, beträgt.

7. Kanalschwebstofffilter nach einem der vorhergehenden Ansprüche, **dadurch gekennzeichnet, dass** der Winkel β bei allen Leitblechen (9) gleich ist.

8. Kanalschwebstofffilter nach einem der vorhergehenden Ansprüche, **dadurch gekennzeichnet, dass** die Winkel β der Leitbleche (9) ungleich sind und dass sich der Winkel β der Leitbleche (9) zum Auslass (3) hin verringert.

9. Kanalschwebstofffilter nach einem der vorhergehenden Ansprüche, .**dadurch gekennzeichnet, dass** der Winkel β größer ist als der Winkel α zwischen der generellen Erstreckung der Strömungsrichtung S in dem jeweiligen Gehäuseabschnitt (6) einerseits und der Ausströmungsrichtung A des Gases im Bereich des Auslasses (3) andererseits.

10. Kanalschwebstofffilter nach einem der vorhergehenden Ansprüche, **dadurch gekennzeichnet, dass** die Länge L_{L} zumindest eines Leitbleches (9), die sich aus der Projektion P des Leitbleches (9) in eine Ebene, die orthogonal zur Strömungsrichtung S in dem Gehäuseabschnitt (6) ausgerichtet ist, ergibt, in etwa der Länge L_{G} des zugeordneten Gehäuseabschnittes (6) entspricht, wobei die Länge L_{L} von 90% bis zu 110% von der Länge L_{G} sein kann.

11. Kanalschwebstofffilter nach einem der vorhergehenden Ansprüche, **dadurch gekennzeichnet, dass** zumindest ein Leitblech (9) im Bereich der dem Auslass (3) abgewandten Seite in dem Gehäuseabschnitt (6) bzw. im Bereich der dem Auslass (3) abgewandten Kante des Gehäuseabschnittes (6) befestigt ist.

12. Kanalschwebstofffilter nach einem der vorhergehenden Ansprüche, **dadurch gekennzeichnet, dass** mehrere nebeneinander angeordnete, in Einströmrichtung E gesehen hintereinander angeordnete Gehäuseabschnitte (6) mit jeweils zumindest einem Filterelement (10, 11) vorgesehen sind.

13. Kanalschwebstofffilter nach einem der vorhergehenden Ansprüche, **dadurch gekennzeichnet, dass** zumindest ein Gehäuseabschnitt (6) zur Entnahme des(der) betreffenden Filterelementes(Filterelemente) (10, 11) öffenbar und verschließbar ist.
